# EUROPÄISCHE PATENTSCHRIFT

(11) **EP 0 481 469 B1**
(45) Veröffentlichungstag und Bekanntmachung des Hinweises auf die Patenterteilung: **27.11.1996**
(21) Anmeldenummer: 91117687.3
(22) Anmeldetag: 16.10.1991
(51) Int. Cl.: F16F 9/34

(54) **Drosseleinrichtung und mit einer solchen Drosseleinrichtung ausgeführtes Zylinderkolbengerät**
Damping apparatus and cylinder piston device equipped with such an apparatus
Dispositif d'amortissement et un appareil cylindre-piston équippé d'un tel dispositif

(30) Priorität: 19.10.1990 DE 4033186
(43) Veröffentlichungstag der Anmeldung: 22.04.1992
(73) Patentinhaber: Stabilus GmbH, D-56070 Koblenz (DE)
(72) Erfinder: Pohlenz, Hans, W-5407 Boppard 4 (DE); Stumm, Rolf, W-5400 Koblenz 34 (DE)
(74) Vertreter: Weickmann, Heinrich, Dipl.-Ing.

(56) Entgegenhaltungen:
- DE-A- 2 734 276
- DE-A- 3 301 544
- DE-U- 7 000 825
- FR-A- 2 052 472
- FR-A- 2 372 301
- FR-A- 2 394 717
- FR-E- 63 350
- GB-A- 571 540

## Beschreibung

Die Erfindung betrifft ein Zylinderkolbengerät umfassend einen Zylinder mit einer Achse, zwei Enden und einem innerhalb des Zylinders zwischen beiden Enden eingeschlossenen Hohlraum, eine durch mindestens eines der Enden entlang der Achse hindurchgeführte Kolbenstange, einen innerhalb des Hohlraums mit der Kolbenstange verbundenen Kolben, welcher innerhalb des Hohlraums zwei Arbeitsräume gegeneinander abgrenzt, eine Fluidenfüllung in den Arbeitsräumen und ein dämpfkrafterzeugendes Verbindungssystem zwischen den beiden Arbeitsräumen, welches in mindestens einen der beiden Arbeitsräume durch mindestens eine mittels elastisch ausrückbarer Abdeckung abgedeckte Mündung ausmündet, wobei der Gesamt-Durchlaßquerschnitt des Verbindungssystems einen von der Druckdifferenz zwischen den beiden Arbeitsräumen unabhängigen Mindestwert besitzt und durch elastische Ausrückung der Abdeckung in Abhängigkeit vom Differenzdruck über diesen Mindestwert hinaus vergrößerbar ist.

Drosseleinrichtungen für Schwingungsdämpfer sind in großem Umfang bekannt. Sie.können mit richtungsabhängiger Dämpfungscharakteristik ausgeführt werden, indem beispielsweise eine erste Gruppe von Drosselbohrungen für eine erste Bewegungsrichtung durch ein erstes Federplattensystem abgedeckt ist und eine zweite Gruppe von Drosselbohrungen für eine zweite Bewegungsrichtung der Kolbenstange durch ein zweites Federplattensystem abgedeckt ist. Durch unterschiedliche Bemessung der Vorspannung der beiden Federplattensysteme läßt sich dann eine unterschiedliche Dämpfungscharakteristik erzielen, je nachdem in welcher Richtung sich die Kolbenstange gegenüber dem Zylinder bewegt.

Die bekannten Drosseleinrichtungen werden häufig auch mit sogenannten Voröffnungsdurchlässen ausgeführt, welche ständig offen sind, also auch dann, wenn zwischen den beidseitigen Druckräumen keine wesentliche Druckdifferenz besteht. Man hat diese Voröffnungsdurchlässe bisher meist in der Weise ausgebildet, daß man an den durch die Federplatten abgedeckten Enden der Bohrungen kleine Öffnungen vorgesehen hat, die auch dann offen sind, wenn die Federplatten bei nicht bestehender Druckdifferenz voll auf den Mündungen der Drosselbohrungen aufliegen. Diese Voröffnungsdurchlässe ergeben zwangsläufig, daß der Mindestwert des Gesamt-Durchlaßquerschnitts zwischen den beiden Druckräumen unabhängig von der Bewegungsrichtung stets der gleiche ist.

Aus der AT-PS 245 952 und der GB-PS 571 540 sind Drosseleinrichtungen für Schwingungsdämpfer und dgl. bekannt, bei denen in einem Kolben eine zur Innenwand des Zylinders hin offene Ringnut ausgebildet ist und diese Ringnut einen Absperring aufnimmt. Der Absperring ist axial gegenüber dem Kolben beweglich und liegt an der Innenumfangsfläche des Zylinders reibend an. Bei Richtungswechsel der Kolbenstangenbewegung bewegt sich der Absperring zwischen zwei Endpositionen gegenüber dem Kolben. Durch diesen Positionswechsel kann der Durchlaßquerschnitt durch den Dämpfungskolben richtungsabhängig verändert werden. Bei dieser Ausführungsform ist der für die jeweilige Bewegungsrichtung der Kolbenstange geltende Durchlaßquerschnitt von der Druckdifferenz zwischen den beiden Arbeitsräumen unabhängig. Man kann also nicht zwischen Voröffnungsdurchlässen und Betriebsdurchlässen unterscheiden.

Die Drosseleinrichtungen mit Federplattenpaketen und Voröffnungsdurchlässen einerseits und diejenigen nach der GB-PS 571 540 und der AT-PS 245 952 sind deshalb als Alternativlösungen zu verstehen und bisher auch verstanden worden, die sich gegenseitig ausschließen.

Aus der FR-A-2 052 472 ist ein Schwingungsdämpfer bekannt, dessen Dämpfkolben von beidseitig durch Federpakete abgedeckten Axialbohrungen durchsetzt ist und dessen Umfangsfläche eine Ringnut zur Aufnahme eines Kolbenrings aufweist. Dabei sind in die Bodenfläche der Ringnut radiale Sackbohrungen eingebracht, welche mit den Axialbohrungen in Verbindung stehen.

Der Erfindung liegt die Aufgabe zugrunde, ein Zylinderkolbengerät der eingangs definierten Art so auszubilden, daß je nach Bewegungsrichtung der Kolbenstange voröffnungsdurchlaßbedingt unterschiedliches Dämpfungsverhalten eintritt.

Zur Lösung dieser Aufgabe wird vorgeschlagen,
daß der Mindestwert des Gesamt-Durchlaßquerschnitts von der Bewegungsrichtung der Kolbenstange gegenüber dem Zylinder abhängig ist dadurch,
a) daß der Kolben an seinem der Innenfläche des Zylinders gegenüberstehenden Umfang eine Ringnut aufweist,
b) daß diese Ringnut mit jedem der Arbeitsräume über ein erstes bzw. zweites stets teilweise offenes Teilverbindungssystem verbunden ist und
c) daß in der Ringnut ein Absperring angeordnet ist, welcher an der Innenfläche des Zylinders anliegt und gegenüber dem Kolben axial beweglich ist, wobei
d) dieser Absperring in Abhängigkeit von der Bewegungsrichtung der Kolbenstange auf mindestens eines der Teilverbindungssysteme querschnittsbeeinflussend einwirkt.

Die Querschnittsbeeinflussung der Teilverbindungssysteme kann insbesondere darauf beruhen, daß jedes der beiden Teilverbindungssysteme mindestens zwei Subverbindungssysteme umfaßt, nämlich ein stets wenigstens teilweise offenes primäres Subverbindungssystem und ein sekundäres Subverbindungssystem, und daß der Absperring in einer ersten Bewegungsrichtung der Kolbenstange das sekundäre Subverbindungssystem des ersten Teilverbindungssystems absperrt und in einer zweiten Bewegungsrichtung das sekundäre Subverbindungssystem des zweiten TeilverbindungsSystems absperrt mit der Folge, daß in der ersten Bewegungsrichtung der Kolbenstange der Mindestwert des Gesamt-Durchlaßquerschnitts im wesentlichen durch das primäre Subverbindungssystem des ersten Teilverbindungssystems bestimmt ist und in der zweiten Bewegungsrichtung der Mindestwert des Gesamt-Durchlaßquerschnitts im wesentlichen durch das primäre Subverbindungssystem des zweiten Teilverbindungssystems bestimmt ist.

Das Dämpfungsverhalten läßt sich mit geringem Rechenaufwand am einfachsten dann festlegen, wenn der Durchflußquerschnitt des primären Subverbindungssystems jeweils eines Teilverbindungssystems klein ist gegenüber dem Durchflußquerschnitt des sekundären Subverbindungssystems des jeweils anderen Teilverbindungssystems.

Der Bauaufwand am Kolben läßt sich auf einfache Weise dadurch reduzieren, daß das sekundäre Subverbindungssystem mindestens eines der Teilverbindungssysteme durch einen Ringspalt zwischen dem Kolbenumfang und der Innenfläche des Zylinders gebildet ist.

Der bauliche Aufwand bei der Bemessung der Mindestwerte des Gesamt-Durchlaßquerschnitts läßt sich dadurch reduzieren, daß das primäre Subverbindungssystem mindestens eines der Teilverbindungssysteme mindestens eine im wesentlichen axial verlaufende Bohrung aufweist, welche an ihrem ringnutfernen Ende durch eine differenzdruckabhängig lüftbare Federplatte auch bei fehlendem Differenzdruck nur teilweise verschlossen ist. Bei dieser Ausführungsform braucht dann nur die Restöffnung festgelegt zu werden, während der Querschnitt der axial verlaufenden Bohrung standardisiert werden kann. Die Festlegung des Restquerschnitts kann in der Weise erfolgen, daß der Durchflußquerschnitt des primären Subverbindungssystems der Bohrung bei nicht gelüfteter Federplatte durch eine Ausnehmung in der Federplatte oder/und in einem die Bohrung umgebenden Anlagebereich für die Federplatte bestimmt ist. Dies wird besonders einfach, wenn der Anlagebereich für die Federplatte gegenüber einer zugehörigen Endfläche des Kolbens erhaben ist, und wenn die Ausnehmung in diesem erhabenen Bereich ausgebildet ist.

Es ist denkbar, daß das primäre Subverbindungssystem des mindestens einen Teilverbindungssystems mindestens eine weitere Bohrung aufweist, welche bei nicht gelüfteter Federplatte vollständig durch diese verschlossen ist. In diesem Fall steht diese weitere Bohrung ggf. zur Veränderung des jeweiligen Mindestquerschnitts zur Verfügung, indem man auch im Mündungsbereich dieser Bohrung ggf. noch eine Ausnehmung vorsieht.

In herkömmlicher Weise kann das Verbindungssystem mindestens eine den Kolben durchsetzende, die Ringnut nicht anschneidende Bohrung besitzen, welche an einem Ende durch eine differenzdruckabhängig lüftbare Federplatte abdeckbar und in Abwesenheit eines Differenzdrucks vollständig abgedeckt ist. Diese Bohrung kann dann ggf. durch dieselbe Federplatte oder dasselbe Federplattensystem abgedeckt werden, welche auch mit dem jeweiligen Teilverbindungssystem zusammenwirkt.

Die das primäre Subverbindungssystem bildenden Bohrungen können grundsätzlich an beliebiger Stelle in die Ringnut einmünden, insbesondere radial innerhalb des Absperrings. Aus Platzgründen kann es vorteilhaft sein, wenn mindestens eine Bohrung des primären Subverbindungssystems mindestens eines Teilverbindungssystems als eine Sacklochborhung ausgebildet ist, welche eine Bodenfläche der Ringnut anschneidet.

Zur Erzielung unterschiedlicher Dämpfungskennlinien im Bereich geringer Kolbenstangengeschwindigkeiten ist es möglich, daß man unter Verwendung eines Standardkolbens entsprechend der jeweils gewünschten Kennlinie mindestens eines der Teilverbindungssysteme verändert. Insbesondere ist es möglich, daß man im Falle der Ausführung des primären Subverbindungssystems eines Teilverbindungssystems mit mindestens einer Bohrung, welche an ihrem ringnutfernen Ende durch eine Federplatte abdeckbar ist, in dem Anlagebereich der Federplatte Ausnehmungen unterschiedlichen Querschnitts einformt oder/und daß man bei Vorhandensein mehrerer solcher Bohrungen innerhalb des primären Subverbindungssystems einer unterschiedlichen Anzahl von Bohrungen derartige Ausnehmungen zuordnet.

Nach einem weiteren Aspekt betrifft die Erfindung ausgehend von der bekannten Ausführungsform nach der FR-A-2 052 472 einen mit einer Kolbenstange zur gemeinsamen Bewegung verbundenen Dämpfkolben für ein Zylinderkolbengerät, dessen Zylinder ein Dämpffluid enthält, wobei dieser Dämpfkolben von axialen Drosselbohrungen durchsetzt ist, welche durch federkraftbeaufschlagte Abdeckmittel bedeckt sind, wobei weiter in einer Ringnut an einer Außenumfangsfläche des Kolbens ein axial beweglicher Kolbenring aufgenommen ist und wobei diese Ringnut von wenigsens einer Sackbohrung angeschnitten ist.

Hierbei ist zur Lösung der oben angegebenen Aufgabe vorgesehen, daß die mindestens eine Sackbohrung im wesentlichen in Achsrichtung der Kolbenstange verlaufend in die Ringnut einmündet und Teil einer druckdifferenzunabhängigen Voröffnungsverbindung zwischen der Ringnut und einer Kolbenendfläche ist.

Dabei ist insbesondere daran gedacht, daß die mindestens eine Sackbohrung eine Bodenfläche der Ringnut anschneidet; so ist vorgesehen, daß die Sackbohrung von einer Ausnehmung in den Abdeckmitteln oder/und einem Anlagebereich der Kolbenendfläche gebildet ist.

Die beiliegenden Figuren erläutern die Erfindung anhand eines Ausführungsbeispiels. Es stellen dar:
- Fig. 1: einen die Achse enthaltenden Querschnitt durch eine erfindungsgemäße Dämpfungseinrichtung und
- Fig. 2: eine Draufsicht auf den Dämpfkolben in Pfeilrichtung A der Fig. 1.

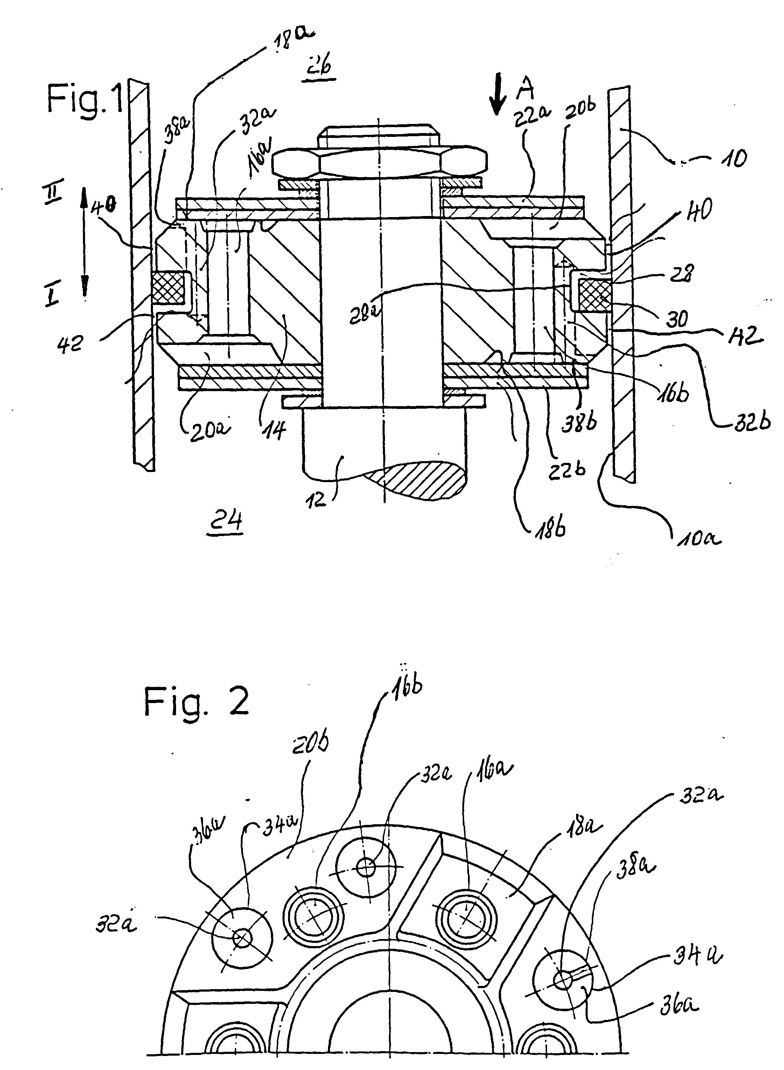

In der Fig. 1 ist ein Zylinder mit 10 bezeichnet. In diesen Zylinder ist durch das nicht dargestellte untere Ende eine Kolbenstange 12 eingeführt. Auf dieserKolbenstange 12 ist ein Dämpfungskolben 14 befestigt. Der Dämpfungskolben 14 ist von Hauptdrosselbohrungen 16a und 16b durchsetzt. Die Hauptdrosselbohrungen 16a sind einer Bewegungsrichtung I zugeordnet, während die Hauptdrosselbohrungen 16b einer Bewegungsrichtung II zugeordnet sind. Die Hauptdrosselbohrungen 16a münden, wie aus Fig. 2 ersichtlich, in erhabene Anlagebereiche 18a an der Oberseite des Dämpfungskolbens, während die Hauptdrosselbohrungen 16b in entsprechend erhabene Anlagebereiche 18b an der Unterseite des Dämpfungskolbens münden. Andererseits enden die Hauptdrosselbohrungen 16a an der unteren Endfläche des Dämpfungskolbens 14 in versenkte Bereiche 20a an der unteren Fläche des Dämpfungskolbens 14, während die Hauptdrosselbohrungen 16b mit ihren oberen Enden in versenkte Bereiche 20b an der oberen Seite des Dämpfungskolbens 14 münden. Die obere Seite des Dämpfungskolbens 14 ist durch ein Federplattenpaket 22a abgedeckt, während die untere Seite des Dämpfungskolbens 14 durch ein Federplattenpaket 22b abgedeckt ist. Oberhalb und unterhalb des Dämpfungskolbens 14 befinden sich Druckräume 24 und 26, die beide mit einem Fluid, insbesondere einem hydraulischen Fluid, ggf. aber auch einem gasförmigen Fluid, gefüllt sein können. Die Federplattenpakete 22a und 22b liegen mit Vorspannung an den Anlagebereichen 18a und 18b an.

Bei einer Abwärtsbewegung des Dämpfungskolbens 14 in Richtung I strömt Dämpfungsfluid durch die Hauptdrosselbohrungen 16a, wobei der Zufluß aus dem Arbeitsraum 24 in das untere Ende der Hauptdrosselbohrungen 16a durch die versenkten Bereiche 20a nicht wesentlich beeinflußt ist. Unter der Druckdifferenz zwischen dem größeren Druck in dem Druckraum 24 und dem geringeren Druck in dem Druckraum 26 hebt das Federplattenpaket 22a von den Anlagebereichen 18a mit steigender Druckdifferenz zunehmend ab. Bei Aufwärtsbewegung des Dämpfungskolbens 14 in Pfeilrichtung II fließt das Dämpfungsfluid durch die Hauptdrosselbohrungen 16b, wobei das Federplattenpaket 22b von den Anlagebereichen 18b mit zunehmender Druckdifferenz zunehmend abhebt.

Es ist zu bemerken, daß die oberen Ausgänge der Hauptdrosselbohrungen 16a und die unteren Ausgänge der Hauptdrosselbohrungen 16b bei stillstehendem Dämpfungskolben durch die Federplattenpakete 22a bzw. 22b vollständig verschlossen sind.

Der Dämpfungskolben 14 weist eine Ringnut 28 in seiner Umfangsfläche auf. Diese Ringnut steht der Innenfläche 10a des Zylinders gegenüber. In der Ringnut 28 ist ein Absperrring 30 aufgenommen, welcher mit seiner äußeren Umfangsfläche an der Innenumfangsfläche 10a des Zylinders 10 anliegt und mit seiner inneren Umfangsfläche Abstand von der Bodenfläche 28a der Ringnut 28 hat. Die axiale Höhe des Absperrings 30 ist geringer als die axiale Höhe der Ringnut 28.

Der Dämpfungskolben 14 weist eine erste Gruppe von Sacklochbohrungen 32a auf, die von der oberen Endfläche des Dämpfungskolbens 14 her eingebohrt sind und die Bodenfläche 28a der Ringnut 28 anschneiden. Weiter weist der Dämpfungskolben 14 eine zweite Gruppe von Sacklochbohrungen 32b auf, die von der unteren Endfläche des Dämpfungskolbens 14 her in den Dämpfungskolben eingebohrt sind und ebenfalls die Bodenfläche 28a der Ringnut 28 anschneiden. Die Sacklochbohrungen 32a enden im Bereich der oberen Endfläche des Dämpfungskolbens 14 in Vorsprüngen 34a, welche Anlagebereiche 36a bilden. Diese Anlagebereiche 36a liegen koplanar mit den Anlagebereichen 18a, so daß das Federplattenpaket 22a auch an diesen Anlagebereichen 36a unter Federspannung anliegt. Wie aus der rechten Hälfte der Fig. 2 zu ersehen, ist in den Anlagebereich 36a eines der Vorsprünge 34a eine radiale Kerbe 38a eingefräst oder eingeprägt. Diese Kerbe 38a kann als Voröffnungsdurchlaß verstanden werden.

Die Sacklochbohrungen 32b enden im Bereich der unteren Kolbenendfläche in Vorsprüngen mit Anlagebereichen (nicht gezeichnet), welche den Vorsprüngen 34a bzw. den Anlagebereichen 36a gemäß Fig. 2 entsprechen. Auch dort ist in einen der Anlagebereiche eine Kerbe 38b eingefräst oder eingeprägt, die wiederum als Voröffnungsdurchlaß verstanden werden kann.

Zwischen dem Dämpfungskoben 14 und dem Zylinder 10 ist oberhalb der Ringnut 28 ein Spalt 40 gebildet und unterhalb der Ringnut 28 ein Spalt 42.

Wenn der Dämpfungskolben 14 sich in Pfeilrichtung I längs nach unten bewegt, nimmt der Absperring 30 die Stellung gemäß der linken Hälfte der Fig. 1 ein. Der Spalt 40 ist geschlossen. Wegen der geringen Druckdifferenz zwischen dem höheren Druck in dem Druckraum 24 und dem geringeren Druck in dem Druckraum 26 sind auch die Hauptdrosselbohrungen 16a noch vollständig geschlossen. Schließlich sind auch die Sacklochbohrungen 32a, denen keine Kerben 38a zugeordnet sind, durch das Federplattenpaket 22a noch vollständig geschlossen. Offen ist nur der Strömungsweg durch den Spalt 42 und die eine Sacklochbohrung 32a, welcher die Kerbe 38a zugeordnet ist. Der Durchflußquerschnitt dieses Strömungswegs ist im wesentlichen bestimmt durch den Querschnitt und die Länge der Kerbe 38a. Dieser Querschnitt ist klein gegenüber dem Querschnitt der Sacklochbohrung 32a und gegenüber dem Querschnitt des Spalts 42, so daß der Durchflußquerschnitt im wesentlichen nur abhängig ist von dem Querschnitt der Kerbe 38a. Es ist zu bemerken, daß auch die Kerbe 38b in diesem Zustand eine Öffnung von dem unteren Druckraum 24 zu der Ringnut 28 bildet. Da diese Kerbe aber ebenfalls sehr kleinen Querschnitt besitzt und parallel geschaltet ist zu dem großen Querschnitt des Spalts 42, gilt erneut, daß der Durchflußquerschnitt des Dämpfungskolbens 14 bei Bewegung nach unten in Pfeilrichtung I allein durch den Querschnitt der Kerbe 38a bestimmt ist, solange bis die Bewegungsgeschwindigkeit der Kolbenstange 12 und damit die Druckdifferenz zwischen den Druckräumen 26 und 24 groß genug wird, um das Federplattenpaket 22a von den Anlagebereichen 18a und 36a abzuheben.

Bei Aufwärtsbewegung des Dämpfungskolbens 14 in Pfeilrichtung II ist - solange die Federplatten 22b nicht von den Anlagebereichen 18b abheben - nur der Strömungsweg über den Spalt 40, die Ringnut 28, die Sacklochbohrung 32b und die Kerbe 38b offen.

Durch unterschiedliche Bemessung der Kerben 38a und 38b kann der Mindest-Durchlaßquerschnitt für die einzelnen Bewegungsrichtungen der auch bei Stillstand und bei extrem langsamer Bewegung offen ist, unterschiedlich gestaltet werden.

Es ist ohne weiteres möglich, diese Mindest-Querschnittwerte zu variieren, indem man entweder die Querschnitte der Kerben 38a und 38b variiert, oder indem man einer variierenden Zahl von Sacklochbohrungen 32a, 32b Kerben 38a bzw. 38b zuordnet. Der Absperring 30 befindet sich in leichtem Reibungseingriff mit der Innenumfangsfläche 10a. Der Absperring stellt somit ein selbstschaltendes Wegeventil dar.

Durch geeignete Maßnahmen im Dämpfungskolben 14 kann sichergestellt werden, daß die verschiedenen Anbauteile des Dämpfungskolbens unverwechselbar montiert werden. Dadurch, daß der Durchflußquerschnitt der Voröffnungsdurchlässe 38a, 38b im wesentlichen allein durch den Querschnitt der jeweiligen Kerben 38a,38b bestimmt ist, lassen sich die Sacklochbohrungen 32a und 32b mit einem gleichbleibenden Normquerschnitt ausführen. Dies erleichtert die Herstellung der Kolben für verschiedene Dämpfungscharakteristiken als Normkolben, die dann nur noch durch Zahl und Querschnitt der Kerben 38a,38b variiert werden müssen.

Es ist aber auch möglich, einen Standardkolben ohne Sacklochbohrungen 32a, 32b und/oder ohne Kolbenringnut 28 herzustellen und dann je nach Dämpfertyp fertig zu bearbeiten.

Grundsätzlich ist es auch möglich, die Sacklochbohrungen 32a, 32b durch Variationen ihres Querschnitts und/oder ihrer Zahl zur Bestimmung der Mindestwerte des Gesamt-Durchflußquerschnitts zu benutzen. In diesem Fall brauchen die Federplattenpakete 22a und 22b die Mündungsöffnungen der Sacklochbohrungen 32a und 32b nicht abzudecken, und die Kerben 38a, 38b können entfallen.

Anstelle der Sacklochbohrungen 16a und 16b könnten auch Bohrungen vorgesehen sein, die sich jeweils über die halbe Kolbenhöhe zwischen der Ringnut 28 und der jeweiligen Kolbenseite erstrecken und in den Ringraum zwischen dem Ringnutboden und der radial inneren Umfangsfläche des Absperrings 30 münden.

## Patentansprüche

1. Zylinderkolbengerät umfassend einen Zylinder (10) mit einer Achse, zwei Enden und einem innerhalb des Zylinders (10) zwischen beiden Enden eingeschlossenen Hohlraum (24,26), eine durch mindestens eines der Enden entlang der Achse hindurchgeführte Kolbenstange (12), einen innerhalb des Hohlraums (24,26) mit der Kolbenstange (12) verbundenen Kolben (14), welcher innerhalb des Hohlraums (24,26) zwei Arbeitsräume (24,26) gegeneinander abgrenzt, eine Fluidenfüllung in den Arbeitsräumen (24,26) und ein dämpfkrafterzeugendes Verbindungssystem (16a,16b,32a,32b,38a,38b,40;42) zwischen den beiden Arbeitsräumen (24,26), welches in mindestens einen der beiden Arbeitsräume (24,26) durch mindestens eine mittels elastisch ausrückbarer Abdeckung (22a,22b) abgedeckte Mündung ausmündet, wobei der Gesamt-Durchlaßquerschnitt des Verbindungssystems einen von der Druckdifferenz zwischen den beiden Arbeitsräumen (24,26) unabhängigen Mindestwert besitzt und durch elastische Ausrückung der Abdeckung (22a,22b) in Abhängigkeit vom Differenzdruck über diesen Mindestwert hinaus vergrößerbar ist,
dadurch gekennzeichnet,
daß der Mindestwert des Gesamt-Durchlaßquerschnitts von der Bewegungsrichtung der Kolbenstange (12) gegenüber dem Zylinder (10) abhängig ist dadurch,
a) daß der Kolben (14) an seinem der Innenfläche (10a) des Zylinders (10) gegenüberstehenden Umfang eine Ringnut (28) aufweist,
b) daß diese Ringnut (28) mit jedem der Arbeitsräume (24,26) über ein erstes (32a,38a,40) bzw. zweites (32b,38b,42) stets teilweise offenes Teilverbindungssystem verbunden ist und
c) daß in der Ringnut (28) ein Absperring (30) angeordnet ist, welcher an der Innenfläche (10a) des Zylinders (10) anliegt und gegenüber dem Kolben (14) axial beweglich ist, wobei
d) dieser Absperring (30) in Abhängigkeit von der Bewegungsrichtung der Kolbenstange (12) auf mindestens eines der Teilverbindungssysteme (32a,38a,40;32b, 38b,42) querschnittsbeeinflussend einwirkt.

2. Zylinderkolbengerät nach Anspruch 1,
dadurch gekennzeichnet,
daß jedes der beiden Teilverbindungssysteme (32a,38a,40) mindestens zwei Subverbindungssysteme (32a,38a;40) umfaßt, nämlich ein stets wenigstens teilweise offenes, primäres Subverbindungssystem (32a,38a) und ein sekundäres Subverbindungssystem (40), und daß der Absperrring (30) in einer ersten Bewegungsrichtung (I) der Kolbenstange (12) das sekundäre Subverbindungssystem (40) des ersten Teilverbindungssystems (32a,38a,40) absperrt und in einer zweiten Bewegungsrichtung (II) das sekundäre Subverbindungssystem (42) des zweiten Teilverbindungssystems (32b,38b,42) absperrt mit der Folge, daß in der ersten Bewegungsrichtung (I) der Kolbenstange (12) der Mindestwert des Gesamt-Durchlaßquerschnitts im wesentlichen durch das primäre Subverbindungssystem (32a,38a) des ersten Teilverbindungssystems (32a, 38a,40) bestimmt ist und in der zweiten Bewegungsrichtung (II) der Mindestwert des Gesamt-Durchlaßquerschnitts im wesentlichen durch das primäre Subverbindungssystem (32b,38b) des zweiten Teilverbindungssystems (32b,38b,42) bestimmt ist.

3. Zylinderkolbengerät nach Anspruch 2,
dadurch gekennzeichnet,
daß der Durchflußquerschnitt des primären Subverbindungssystems (32a,38a) jeweils eines Teilverbindungssystems (32a,38a,40) klein ist gegenüber dem Durchflußquerschnitt des sekundären Subverbindungssystems (42) des jeweils anderen Teilverbindungssystems (32b,38b, 42).

4. Zylinderkolbengerät nach einem der Ansprüche 2 und 3,
dadurch gekennzeichnet,
daß das sekundäre Subverbindungssystem (40) mindestens eines (32a,38a,40) der Teilverbindungssysteme durch einen Ringspalt (40) zwischen dem Kolbenumfang und der Innenfläche (10a) des Zylinders (10) gebildet ist.

5. Zylinderkolbengerät nach einem der Ansprüche 2 - 4,
dadurch gekennzeichnet,
daß das primäre Subverbindungssystem (32a,38a) mindestens eines (32a,38a,40) der Teilverbindungssysteme mindestens eine im wesentlichen axial verlaufende Bohrung (32a) aufweist, welche an ihrem ringnutfernen Ende durch eine differenzdruckabhängig lüftbare Federplatte (22a) auch bei fehlendem Differenzdruck nur teilweise verschlossen ist.

6. Zylinderkolbengerät nach Anspruch 5,
dadurch gekennzeichnet,
daß der Durchflußquerschnitt des primären Subverbindungssystems (32a,38a) der Bohrung (32a) bei nicht gelüfteter Federplatte (22a) durch eine Ausnehmung (38a) in der Federplatte (22a) oder/und in einem die Bohrung (32a) umgebenden Anlagebereich (36a) für die Federplatte (22a) bestimmt ist.

7. Zylinderkolbengerät nach Anspruch 6,
dadurch gekennzeichnet,
daß der Anlagebereich (36a) für die Federplatte (22a) gegenüber einer zugehörigen Endfläche (20b) des Kolbens (14) erhaben ist und daß die Ausnehmung (38a) in diesem erhabenen Anlagebereich (36a) ausgebildet ist.

8. Zylinderkolbengerät nach einem der Ansprüche 5 - 7,
dadurch gekennzeichnet,
daß das primäre Subverbindungssystem (32a,38a) des mindestens einen Teilverbindungssystems (32a,38a,40) mindestens eine weitere Bohrung (32a) aufweist, welche bei nicht gelüfteter Federplatte (22a) vollständig durch diese verschlossen ist.

9. Zylinderkolbengerät nach einem der Ansprüche 1 - 8,
dadurch gekennzeichnet,
daß das Verbindungssystem (16a,16b,32a,38a,32b,38b, 40,42) mindestens eine den Kolben (14) durchsetzende, die Ringnut (28) nicht anschneidende Bohrung (16a,16b) besitzt, welche an einem Ende durch eine differenzdruckabhängig lüftbare Federplatte (22a,22b) abdeckbar und in Abwesenheit eines Differenzdrucks vollständig abgedeckt ist.

10. Zylinderkolbengerät nach einem der Ansprüche 2 - 9,
dadurch gekennzeichnet,
daß mindestens eine Bohrung (32a) des primären Subverbindungssystems (32a,38a) mindestens eines Teilverbindungssystems (32a,38a,40) als eine Sacklochbohrung ausgebildet ist, welche eine Bodenfläche (28a) der Ringnut (28) anschneidet.

11. Mit einer Kolbenstange (12) zur gemeinsamen Bewegung verbundener Dämpfkolben (14) für ein Zylinderkolbengerät, dessen Zylinder (10) ein Dämpffluid enthält, insbesondere für ein Zylinderkolbengerät nach einem der Ansprüche 1 - 10,
wobei dieser Dämpfkolben (14) von axialen Drosselbohrungen (16a,16b) durchsetzt ist, welche durch federkraftbeaufschlagte Abdeckmittel (22a,22b) bedeckt sind,
wobei weiter in einer Ringnut (28) an einer Außenumfangsfläche des Kolbens (14) ein axial beweglicher Kolbenring (30) aufgenommen ist
und wobei diese Ringnut (28) von wenigstens einer Sackbohrung (32a,32b) angeschnitten ist,
dadurch gekennzeichnet,
daß die mindestens eine Sackbohrung (32a,32b) im wesentlichen in Achsrichtung der Kolbenstange (12) verlaufend in die Ringnut (28) einmündet und Teil einer druckdifferenzunabhängigen Voröffnungsverbindung (32a-38a,32b-38b) zwischen der Ringnut (28) und einer Kolbenendfläche ist.

12. Dämpfkolben nach Anspruch 11,
dadurch gekennzeichnet,
daß die mindestens eine Sackbohrung (32a,32b) eine Bodenfläche (28a) der Ringnut (28) anschneidet.

13. Dämpfkolben nach Anspruch 11 oder 12,
dadurch gekennzeichnet,
daß die Sackbohrung (32a,32b) in Überdeckung mit den Abdeckmitteln (22a,22b) aus der jeweiligen Kolbenendfläche ausmündet und von einer Ausnehmung (38a,38b) in den Abdeckmitteln (22a,22b) oder/und einem Anlagebereich (36a,36b) der Kolbenendfläche gebildet ist.

14. Verfahren, zur Herstellung von Zylinderkolbengeräten unterschiedlicher Dämpfungskennlinien nach einem der Ansprüche 1 - 10,
dadurch gekennzeichnet,
daß man unter Verwendung eines Standardkolbens entsprechend der jeweils gewünschten Kennlinie mindestens eines der Teilverbindungssysteme (32a,38a,40;32b,38b,42) verändert.

15. Verfahren nach Anspruch 14,
dadurch gekennzeichnet,
daß man im Falle der Ausführung des primären Subverbindungssystems (32a,38a) eines Teilverbindungssystems (32a,38a,40) mit mindestens einer Bohrung (32a), welche an ihrem ringnutfernen Ende durch eine Federplatte (22a) abdeckbar ist, in dem Anlagebereich (36a) der Federplatte (22a) Ausnehmungen (38a) unterschiedlichen Querschnitts einformt oder/und daß man bei Vorhandensein mehrerer solcher Bohrungen (32a) innerhalb des primären Subverbindungssystems (32a,38a) einer unterschiedlichen Anzahl von Bohrungen (32a) derartige Ausnehmungen zuordnet.

## Claims

1. A piston-cylinder assembly comprising a cylinder (10) having an axis, two ends and a cavity (24,26) enclosed within the cylinder (10) between the two ends, a piston rod (12) passing through at least one of the ends along the axis, a piston (14) which inside the cavity (24,26) is connected to the piston rod (12) and which inside the cavity (24,26) mutually delimits two working chambers (24,26), a fluid filling the working chambers (24,26), and a communicating system (16a,16b,32a,32b,38a,38b,40;42) between the two working chambers (24,26), which generates a damping force and which in at least one of the two working chambers (24,26) discharges through at least one orifice covered by an elastically releasable cover (22a,22b), wherein the overall passage cross-section of the communicating system has a minimum value independent of the pressure difference between the two working chambers (24,26) and can be increased above this minimum value by elastic release of the cover (22a,22b) depending on the differential pressure, characterised in that the minimum value of the overall passage cross-section is dependent on the movement direction of the piston rod (12) relative to the cylinder (10), in
a) that the piston (14) has an annular groove (28) on its periphery opposite the inner surface (10a) of the cylinder (10),
b) that this annular groove (28) is connected with each of the working chambers (24,26) via a first partial communicating system(32a,38a,40) and a second partial communicating system (32b,38b,42) which are both always partially open, and
c) that a shut-off ring (30) is provided in the annular groove (28), which shut-off ring abuts against the inner surface (10a) of the cylinder (10) and is axially movable relative to the piston (14), wherein
d) depending on the movement direction of the piston rod (12) this shut-off ring (30) acts on at least one of the partial communicating systems (32a,38a,40;32b,38b,42) so as to affect the cross-section.

2. A piston-cylinder assembly according to Claim 1, characterised in that each of the two partial communicating systems (32a,38a,40) comprises at least two subcommunicating systems (32a,38a,40), namely an always at least partly open, primary subcommunicating system (32a,38a) and a secondary subcommunicating system (40), and in that in a first movement direction (I) of the piston rod (12) the shut-off ring (30) shuts off the secondary subcommunicating system (40) of the first partial communicating system (32a,38a,40), and in a second movement direction (II) shuts off the secondary subcommunicating system (42) of the second partial communicating system (32b,38b,42) with the result that in the first movement direction (I) of the piston rod (12) the minimum value of the overall passage cross-section is determined substantially by the primary subcommunicating system (32a,38a) of the first partial communicating system (32a,38a,40) and in the second movement direction (II) the minimum value of the overall passage cross-section is determined substantially by the primary subcommunicating system (32b,38b) of the second partial communicating system (32b,38b,42).

3. A piston-cylinder assembly according to Claim 2, characterised in that the passage cross-section of the primary subcommunicating system (32a,38a) of the respective partial communicating system (32a,38a,40) is small with respect to the passage cross-section of the secondary subcommunicating system (42) of the respective other partial communicating system (32b,38b,42).

4. A piston-cylinder assembly according to either one of Claims 2 and 3, characterised in that the secondary subcommunicating system (40) of at least one (32a,38a,40) of the partial communicating systems is formed by an annular clearance (40) between the piston circumference and the inner surface (10a) of the cylinder (10).

5. A piston-cylinder assembly according to any one of Claims 2 to 4, characterised in that the primary subcommunicating system (32a,38a) of at least one (32a,38a,40) of the partial communicating systems has a substantially axially extending bore (32a) which is closed only partly, even when there is no differential pressure, at its end remote from the annular groove by a spring plate (22a) which can be lifted depending on differential pressure.

6. A piston-cylinder assembly according to Claim 5, characterised in that the passage cross-section of the primary subcommunicating system (32a,38a) of the bore (32a), when the spring plate (22a) is not lifted, is determined by a recess (38a) in the spring plate (22a) and/or in an abutment zone (36a) for the spring plate (22a) surrounding the bore (32a).

7. A piston-cylinder assembly according to Claim 6, characterised in that the abutment zone (36a) for the spring plate (22a) is raised with respect to the associated end surface (20b) of the piston (14), and in that the recess (38a) is formed in this raised abutment zone (36a).

8. A piston-cylinder assembly according to any one of Claims 5 to 7, characterised in that the primary subcommunicating system (32a,38a) of the at least one partial communicating system (32a,38a,40) has at least one further bore (32a) which is completely closed thereby when the spring plate (22a) is not lifted.

9. A piston-cylinder assembly according to any one of Claims 1 to 8, characterised in that the communicating system (16a,16b,32a,38a,32b,38b,40;42) has at least one bore (16a,16b) which passes through the piston (14) but does not intersect the annular groove (28) and which at one end can be covered by a liftable spring plate (22a,22b) dependent on differential pressure and is completely covered in the absence of a differential pressure.

10. A piston-cylinder assembly according to any one of Claims 2 to 9, characterised in that at least one bore (32a) of the primary subcommunicating system (32a,38a) of at least one partial communicating system (32a,38a,40) is in the form of a blind bore which intersects a bottom surface (28a) of the annular groove (28).

11. A damping piston (14), which is connected to a piston rod (12) for common movement, for a piston-cylinder assembly whose cylinder (10) contains a damping fluid, in particular for a piston-cylinder assembly according to any one of Claims 1 to 10, wherein this damping piston (14) is pierced by axial throttle bores (16a,16b) which are covered by covering means (22a,22b) acted upon by spring force, and wherein an axially movable piston ring (30) is accommodated in an annular groove (28) in an outer circumferential surface of the piston (14), and also wherein this annular groove (28) is intersected by at least one blind bore (32a,32b), characterised in that the at least one blind bore (32a,32b) extending substantially in the axial direction of the piston rod (12) discharges into the annular groove (28) and is part of a preopening connection (32a-38a,32b-38b) dependent on differential pressure, between the annular groove (28) and a piston end face.

12. A damping piston according to Claim 11, characterised in that the at least one blind bore (32a,32b) intersects a bottom surface (28a) of the annular groove (28).

13. A damping piston according to Claim 11 or 12, characterised in that the blind bore (32a,32b) discharges from the respective piston end face overlapping the covering means (22a,22b) and is formed by a recess (38a,38b) in the covering means (22a,22b) and/or an abutment zone (36a,36b) of the piston end face.

14. A method of producing piston-cylinder assemblies with different damping characteristic curves according to any one of Claims 1 to 10, characterised in that using a standard piston in accordance with the respectively desired characteristic curve at least one of the partial communicating systems (32a,38a,40;32b,38b,42) is modified.

15. A method according to Claim 14, characterised in that if the primary subcommunicating system (32a,38a) of one partial communicating system (32a,38a,40) is formed with at least one bore (32a) which can be covered at its end remote from the annular groove by a spring plate (22a), recesses (38a) of different cross-section are formed in the abutment zone (36a) of the spring plate (22a) and/or if a plurality of such bores (32a) are provided inside the primary subcommunicating system (32a,38a) these recesses are associated with a different number of bores (32a).

## Revendications

1. Dispositif à cylindre et piston comportant un cylindre (10) avec un axe, deux extrémités et une cavité (24, 26) enfermée à l'intérieur du cylindre (10) entre les deux extrémités, une tige de piston (12) traversant au moins l'une des extrémités le long de l'axe, un piston (14) relié à l'intérieur de la cavité (24, 26) avec la tige de piston (12), lequel piston délimite l'une par rapport à l'autre deux chambres de travail (24, 26) à l'intérieur de la cavité (24, 26), un remplissage de fluide dans les chambres de travail (24, 26) et un système de liaison (16a, 16b, 32a, 32b, 38a, 38b, 40 ; 42) entre les deux chambres de travail (24, 26), produisant une force d'amortissement, qui débouche dans au moins l'une des deux chambres de travail (24, 26) par au moins un débouché recouvert au moyen d'une couverture (22a, 22b) pouvant être dégagée élastiquement, la section transversale totale de passage du système de liaison présentant une valeur minimale indépendante de la différence de pression entre les deux chambres de travail (24, 26) et pouvant être augmentée au-delà de cette valeur minimale, en fonction de la pression différentielle au-dessus de cette valeur minimale, par dégagement élastique de la couverture (22a, 22b),
caractérisé
en ce que la valeur minimale de la section transversale totale de passage dépend du sens de déplacement de la tige de piston (12) par rapport au cylindre (10) du fait
a) que le piston (14) présente une rainure annulaire (28), sur sa périphérie faisant face à la surface intérieure (10a) du cylindre (10),
b) que cette rainure annulaire (28) est reliée avec chacune des chambres de travail (24,26), par - respectivement - un premier système de liaison partiel (32a,38a,40) et un deuxième système de liaison partiel (32b,38b,42), les deux systèmes étant toujours partiellement ouvert et
c) que dans la rainure annulaire (28) est placé un anneau d'arrêt (30), qui s'applique contre la surface intérieure (10a) du cylindre (10) et est mobile axialement par rapport au piston (14),
d) cet anneau d'arrêt (10) agissant, de manière à influencer la section transversale, en fonction du sens de déplacement de la tige de piston (12), sur au moins l'un des systèmes de liaison partiels (32a, 38a, 40 ; 32b, 38b, 42).

2. Dispositif à cylindre et piston selon la revendication 1,
caractérisé
en ce que chacun des deux systèmes de liaison partiels (32a, 38a, 40) comporte au moins deux sous-systèmes de liaison (32a, 38a ; 40), à savoir un sous-système de liaison primaire (32a, 38a), toujours au moins partiellement ouvert et un sous-système de liaison secondaire (40), et en ce que l'anneau d'arrêt (30) ferme dans un premier sens de déplacement (I) de la tige de piston (12) le sous-système de liaison secondaire (40) du premier système de liaison partiel (32a, 38a, 40) et, dans un deuxième sens de déplacement (II), ferme le sous-système de liaison secondaire (42) du deuxième système de liaison partiel (32b, 38b, 42) avec pour conséquence que dans le premier sens de déplacement (I) de la tige de piston (12), la valeur minimale de la section transversale totale de passage est déterminée essentiellement par le sous-système de liaison primaire (32a, 38a) du premier système de liaison partiel (32a, 38a, 40) et, dans le second sens de déplacement (II), la valeur minimale de la section transversale totale de passage est déterminée essentiellement par le sous-système de liaison primaire (32b, 38b) du deuxième système de liaison partiel (32b, 38b, 42).

3. Dispositif à cylindre et piston selon la revendication 2,
caractérisé
en ce que la section transversale de passage du sous-système de liaison primaire (32a, 38a) d'un système de liaison partiel (32a, 38a, 40) est petite par rapport à la section transversale de passage du sous-système de liaison secondaire (42) de l'autre système de liaison partiel (32b, 38b, 42).

4. Dispositif à cylindre et piston selon l'une des revendications 2 et 3,
caractérisé
en ce que le sous-système de liaison secondaire (40) d'au moins l'un (32a, 38a, 40) des systèmes de liaison partiels est formé par une fente annulaire (40) entre le pourtour du piston et la surface intérieure (10a) du cylindre (10).

5. Dispositif à cylindre et piston selon l'une des revendications 2 à 4,
caractérisé
en ce que le sous-système de liaison primaire (32a, 38a) d'au moins un (32a, 38a, 40) des systèmes de liaison partiels présente au moins un perçage (32a) sensiblement axial, qui n'est que partiellement fermé à son extrémité éloignée de la rainure annulaire, par une plaque-ressort (22a) relevable en fonction de la pression différentielle, y compris en cas d'absence de pression différentielle.

6. Dispositif à cylindre et piston selon la revendication 5,
caractérisé
en ce que la section transversale de passage du sous-système de liaison primaire (32a, 38a) du perçage (32a), lorsque la plaque-ressort (22a) n'est pas relevée, est déterminée par un évidement (38a) dans la plaque-ressort (22a) ou/et dans une zone d'application (36a), entourant le perçage (32a), pour la plaque-ressort (22a).

7. Dispositif à cylindre et piston selon la revendication 6,
caractérisé
en ce que la zone d'application (36a) pour la plaque-ressort (22a) est en relief par rapport à une face d'extrémité (20b) correspondante du piston (14) et en ce que l'évidement (38a) est formé dans cette zone d'application (36a) en relief.

8. Dispositif à cylindre et piston selon l'une des revendications 5 à 7,
caractérisé
en ce que le sous-système de liaison primaire (32a, 38a) d'au moins un système de liaison partiel (32a, 38a, 40) présente au moins un autre perçage (32a), qui, lorsque la plaque-ressort (22a) n'est pas relevée, est totalement fermé par celle-ci.

9. Dispositif à cylindre et piston selon l'une des revendications 1 à 8,
caractérisé
en ce que le système de liaison (16a, 16b, 32a, 38a, 32b, 38b, 40, 42) possède au moins un perçage (16a, 16b) traversant le piston (14), ne coupant pas la rainure annulaire (28), qui peut être recouvert, à une extrémité, par une plaque-ressort (22a, 22b) relevable en fonction de la pression différentielle et est totalement recouvert, en l'absence de pression différentielle.

10. Dispositif à cylindre et piston selon l'une des revendications 2 à 9,
caractérisé
en ce qu'au moins un perçage (32a) du sous-système de liaison primaire (32a, 38a) d'au moins un système de liaison partiel (32a, 38a, 40) est conformé en trou borgne, qui coupe une surface de fond (28a) de la rainure annulaire (28).

11. Piston d'amortissement (14) relié à une tige de piston (12) en vue de leur déplacement commun pour un dispositif à cylindre et piston, dont le cylindre (10) contient un fluide d'amortissement, en particulier pour un dispositif à cylindre et piston selon l'une des revendications 1 à 10,
dans lequel ce piston d'amortissement (14) est traversé par des perçages d'étranglement axiaux (16a, 16b), qui sont recouverts par des moyens de couverture (22a, 22b) soumis à une force de ressort,
dans lequel en outre un segment de piston (30), mobile axialement, est logé dans une rainure annulaire (28), sur une surface périphérique extérieure du piston (14)
et dans lequel cette rainure annulaire (28) est coupée par au moins un trou borgne (32a, 32b),
caractérisé
en ce que le ou chaque trou borgne (32a, 32b) débouche dans la rainure annulaire (28), sensiblement dans la direction axiale de la tige de piston (12) et fait partie d'une liaison de pré-ouverture (32a à 38a, 32b à 38b), dépendant de la pression différentielle, entre la rainure annulaire (28) et une face d'extrémité du piston.

12. Piston d'amortissement selon la revendication 11,
caractérisé
en ce que le ou chaque trou borgne (32a, 32b) coupe une surface de fond (28a) de la rainure annulaire (28).

13. Piston selon la revendication 11 ou 12,
caractérisé
en ce que le trou borgne (32a, 32b) débouche, en recouvrement avec les moyens de couverture (22a, 22b) de la face d'extrémité respective du piston et est formé par un évidement (38a, 38b) dans les moyens de couverture (22a, 22b) ou/et par une zone d'application (36a, 36b) de la face d'extrémité du piston.

14. Procédé de fabrication de dispositifs à cylindre et piston à courbes caractéristiques d'amortissement différentes selon l'une des revendications 1 à 10,
caractérisé
en ce qu'avec utilisation d'un piston standard on modifie au moins l'un des systèmes de liaison partiels (32a, 38a, 40 ; 32b, 38b, 42) suivant la courbe caractéristique voulue dans chaque cas.

15. Procédé selon la revendication 14,
caractérisé
en ce que dans le cas où le sous-système de liaison primaire (32a, 38b) d'un système de liaison partiel (32a, 38a, 40) est réalisé avec au moins un perçage (32a), qui peut être recouvert à son extrémité éloignée de la rainure annulaire par une plaque-ressort (22a), on forme dans la zone d'application (36a) de la plaque-ressort (22a), des évidements (38a) de section transversale différente ou/et en ce qu'en présence de plusieurs de ces perçages (32a) à l'intérieur du sous-système de liaison primaire (32a, 38a), on affecte des évidements de ce type à un nombre différent de perçages (32a).
